# FASCICULE DE BREVET EUROPEEN

(11) **EP 3 610 134 B1**
(45) Date de publication et mention de la délivrance du brevet: **10.03.2021**
(21) Numéro de dépôt: 18729737.9
(22) Date de dépôt: 17.05.2018
(51) Int. Cl.: F01D 9/06, F02C 7/14, F28D 1/03, F28D 1/02, F28F 3/02, F28D 21/00, F01D 5/18

(54) **AUBE DIRECTRICE, TURBOMACHINE ET PROCÉDÉ DE FABRICATION ASSOCIÉS**
LEITSCHAUFEL, ZUGEHÖRIGE STRÖMUNGSMASCHINE UND HERSTELLUNGSVERFAHREN
STATOR VANE, CORRESPONDING TURBOMACHINE AND MANUFACTURING METHOD

(30) Priorité: 22.05.2017 FR 1754544
(43) Date de publication de la demande: 19.02.2020
(73) Titulaire: Safran Aircraft Engines, 75015 Paris (FR)
(72) Inventeur: MARQUIE, Dimitri Daniel Gabriel, 77550 Moissy-Cramayel (FR); LEGUERY, Geoffray Henri Robert, 77550 Moissy-Cramayel (FR); SENEJOUX, Pierre Fran ois, 77550 Moissy-Cramayel (FR)
(74) Mandataire: Brevalex
(86) Numéro de dépôt international: PCT/FR2018/051193
(87) Numéro de publication internationale: WO 2018/215712

(56) Documents cités:
- US-A1- 2012 207 591
- US-B2- 8 616 834

## Description

### DOMAINE TECHNIQUE

La présente invention se rapporte au domaine des turbomachines d'aéronef à double flux, et en particulier à la conception des aubes directrices agencées dans tout ou partie d'un flux d'air d'une soufflante de la turbomachine.

Il s'agit de préférence d'aubes directrices de sortie, également dénommées OGV (de l'anglais « Outlet Guide Vane »), prévues pour redresser le flux d'air en sortie de la soufflante. Alternativement ou simultanément, des aubes directrices pourraient le cas échéant être placées à l'entrée de la soufflante. Les aubes directrices sont classiquement agencées dans la veine secondaire de la turbomachine.

L'invention concerne de préférence un turboréacteur d'aéronef équipé de telles aubes directrices de sortie. Elle concerne également un procédé de fabrication d'une telle aube.

### ETAT DE LA TECHNIQUE ANTERIEURE

Sur certaines turbomachines à double flux, il est connu d'implanter des aubes directrices de sortie en aval de la soufflante pour redresser le flux qui s'échappe de celle-ci, et aussi éventuellement pour remplir une fonction structurale. Cette dernière fonction vise en effet à permettre le passage des efforts du centre de la turbomachine, vers une virole extérieure située dans le prolongement du carter de soufflante. Dans ce cas de figure, une attache moteur est classiquement agencée sur ou à proximité de cette virole extérieure, pour assurer la fixation entre la turbomachine et un mât d'accrochage de l'aéronef.

Récemment, il a également été proposé d'affecter une fonction additionnelle aux aubes directrices de sortie. Il s'agit d'une fonction d'échangeur thermique entre l'air extérieur traversant la couronne d'aubes directrices de sortie, et du lubrifiant circulant à l'intérieur de ces aubes. Cette fonction d'échangeur thermique est par exemple connue du document US 8 616 834, ou encore du document FR 2 989 110.

Le lubrifiant destiné à être refroidi par les aubes directrices de sortie peut provenir de différentes zones de la turbomachine. Il peut en effet s'agir d'un lubrifiant circulant à travers des enceintes de lubrification des paliers de roulement supportant les arbres moteur et/ou le moyeu de soufflante, ou encore d'un lubrifiant dédié à la lubrification des éléments de transmission mécanique de la boîte d'accessoires (de l'anglais AGB « Accessory Geared Box»). Enfin, il peut aussi servir à la lubrification d'un réducteur d'entraînement de la soufflante, lorsqu'un tel réducteur est prévu sur la turbomachine afin de diminuer la vitesse de rotation de sa soufflante.

Les besoins croissants en lubrifiant nécessitent d'adapter en conséquence la capacité de dissipation de chaleur, associée aux échangeurs destinés au refroidissement du lubrifiant. Le fait d'attribuer un rôle d'échangeur thermique aux aubes directrices de sortie, comme dans les solutions des deux documents cités ci-dessus, permet en particulier de diminuer, voire de supprimer les échangeurs conventionnels du type ACOC (de l'anglais «Air Cooled Oil Cooler »). Ces échangeurs ACOC étant généralement agencés dans la veine secondaire, leur diminution / suppression permet de limiter les perturbations du flux secondaire, et d'augmenter ainsi le rendement global de la turbomachine.

Au sein du passage intérieur de refroidissement de lubrifiant, il est possible d'implanter des plots destinés à perturber le flux de lubrifiant et à augmenter la surface mouillée, dans le but d'assurer un meilleur échange thermique. Cependant, la fabrication de ces plots peut s'avérer longue et/ou coûteuse. Plusieurs techniques ont déjà été envisagées comme l'usinage conventionnel, à l'aide d'une fraise classique, par exemple de diamètre de 5 mm. Avec cette technique utilisant une fraise dite « boule », le volume de matière à retirer est très élevé (par exemple de l'ordre de 1,5 kg par aube), ce qui représente un nombre d'heures d'usinage important et implique un coût de fabrication élevé.

Une autre technique envisagée est l'électroérosion, ou EDM (de l'anglais « *electrical discharge machining* »). Cependant, la mise en œuvre de cette technique implique un coût d'outillage important.

Par conséquent, il subsiste un besoin d'aboutir à une conception facilitant la fabrication d'une telle aube à échangeur intégré.

### EXPOSE DE L'INVENTION

Pour répondre au moins partiellement à ce besoin, l'invention a tout d'abord pour objet une aube directrice destinée à être agencée dans tout ou partie d'un flux d'air d'une soufflante de turbomachine d'aéronef à double flux, l'aube directrice comprenant un pied, une tête, ainsi qu'une partie aérodynamique de redressement de flux agencée entre le pied et la tête de l'aube, ladite partie aérodynamique de l'aube comportant au moins un passage intérieur de refroidissement de lubrifiant en partie délimité par une paroi d'intrados et par une paroi d'extrados de l'aube, ledit passage étant traversé par des plots perturbateurs de flux réalisés d'un seul tenant avec l'une des parois d'intrados et d'extrados.

Selon l'invention, dans un plan de coupe quelconque traversant orthogonalement les plots, l'espace défini entre ces plots présente une géométrie définie exclusivement par un ensemble d'anneaux de même dimension, se recouvrant partiellement les uns les autres et délimitant chacun en partie au moins deux de ces plots.

L'invention a également pour objet un procédé de fabrication d'une aube directrice destinée à être agencée dans tout ou partie d'un flux d'air d'une soufflante de turbomachine d'aéronef à double flux, l'aube directrice comprenant un pied, une tête, ainsi qu'une partie aérodynamique de redressement de flux agencée entre le pied et la tête de l'aube, ladite partie aérodynamique de l'aube comportant au moins un passage intérieur de refroidissement de lubrifiant en partie délimité par une paroi d'intrados et par une paroi d'extrados de l'aube, ledit passage étant traversé par des plots perturbateurs de flux réalisés d'un seul tenant avec l'une des parois d'intrados et d'extrados.

Selon l'invention, le procédé comprend une étape de réalisation des plots par une pluralité d'usinages de ladite une des parois d'intrados et d'extrados à l'aide d'une fraise cloche, cette étape étant mise en œuvre de sorte que les parties subsistantes non-usinées par ladite fraise cloche forment lesdits plots.

Ainsi, l'invention prévoit astucieusement l'utilisation d'un outil de fraisage particulier pour réaliser les usinages, à savoir une fraise cloche qui permet de laisser subsister des parties en saillie qui, après la succession d'usinages, forment les plots perturbateurs de flux dans le passage intérieur de refroidissement de lubrifiant. La fabrication de l'aube s'en trouve facilitée, et son coût sensiblement réduit.

L'invention prévoit de préférence au moins l'une quelconque des caractéristiques optionnelles suivantes, prises isolément ou en combinaison.

Dans ledit plan de coupe, chaque plot est délimité par quatre côtés chacun présentant une forme d'arc de cercle. Alternativement, certains plots pourraient est délimités par deux ou trois côtés, chacun présentant une forme d'arc de cercle.

Ledit ensemble d'anneaux est réalisé par une alternance de premières et de secondes rangées d'anneaux se chevauchant partiellement et se succédant selon une direction d'envergure de l'aube, chaque première rangée comprenant de préférence un nombre N d'anneaux et chaque seconde rangée comprenant de préférence un nombre N-1 d'anneaux, les centres de ces anneaux étant disposés en quinconce de manière à définir une alternance de premières rangées de plots comprenant chacune un nombre N+1 de plots et de secondes rangées de plots comprenant chacune un nombre N de plots. De préférence, le nombre N est compris entre 2 et 5.

A cet égard, il est noté que le nombre d'anneaux par rangée dépend essentiellement de la corde de l'aube, des diamètres intérieur et extérieur de la fraise cloche, et de l'entraxe entre deux passages consécutifs de cette fraise.

Les anneaux de l'ensemble présentent un diamètre extérieur compris entre 20 et 50 mm et un diamètre intérieur compris entre 5 et 20 mm.

Ladite une des parois d'intrados et d'extrados équipée des plots fait partie d'un corps de l'aube, ou d'un capot de fermeture de ce corps.

L'autre des éléments parmi les parois d'intrados et d'extrados est réalisé d'un seul tenant avec des plots additionnels perturbateurs de flux. De plus, dans un plan de coupe quelconque traversant orthogonalement les plots additionnels, l'espace défini entre ces plots additionnels présente une géométrie définie exclusivement par un ensemble d'anneaux additionnels de même dimension, se recouvrant partiellement les uns les autres et délimitant chacun en partie au moins deux de ces plots additionnels.

Les plots additionnels pénètrent dans l'espace défini entre les plots, et les plots pénètrent dans l'espace défini entre les plots additionnels.

Les usinages à l'aide de la fraise cloche sont réalisés selon des axes d'usinage parallèles, de préférence agencés en quinconce. Cependant, de faibles angles peuvent être prévus entre ces axes d'usinage, en particulier lorsqu'il est réalisé des usinages d'axes orthogonaux localement à une surface moyenne de l'aube vrillée, qui présente de préférence une épaisseur sensiblement constante au niveau des passages.

Enfin, l'invention a pour objet une turbomachine d'aéronef, de préférence un turboréacteur, comprenant une pluralité d'aubes directrices telles que celle décrite ci-dessus, agencées en aval ou en amont d'une soufflante de la turbomachine.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
- la figure 1 représente une vue schématique de côté d'un turboréacteur selon l'invention ;
- la figure 2 représente une vue agrandie, plus détaillée, d'une aube directrice de sortie du turboréacteur montré sur la figure précédente, selon un premier mode de réalisation préféré de l'invention ;
- la figure 2a est une vue en coupe prise le long de la ligne IIa-IIa de la figure 2 ;
- la figure 3 est une vue agrandie en perspective d'une partie de l'aube directrice de sortie montrée sur la figure précédente ;
- la figure 4 correspond à une vue en coupe prise le long de la ligne IV-IV de la figure 3 ;
- la figure 5 représente une vue partielle en coupe selon le plan V de la figure 4, traversant orthogonalement les plots perturbateurs de flux ;
- les figures 6 et 7 sont des vues en perspective schématisant plusieurs usinages destinés à la formation des plots montrés sur la figure 5 ;
- la figure 8 est une vue schématisant l'ensemble des usinages permettant l'obtention des plots montrés sur la figure 5 ;
- la figure 9 est une vue en perspective d'une partie d'un capot de la partie aérodynamique de l'aube, selon un autre mode de réalisation préféré de l'invention ; et
- la figure 10 est une vue partielle en perspective montrant l'imbrication des plots au sein du passage intérieur de refroidissement de lubrifiant.

### EXPOSE DETAILLE DE MODES DE REALISATION PREFERES

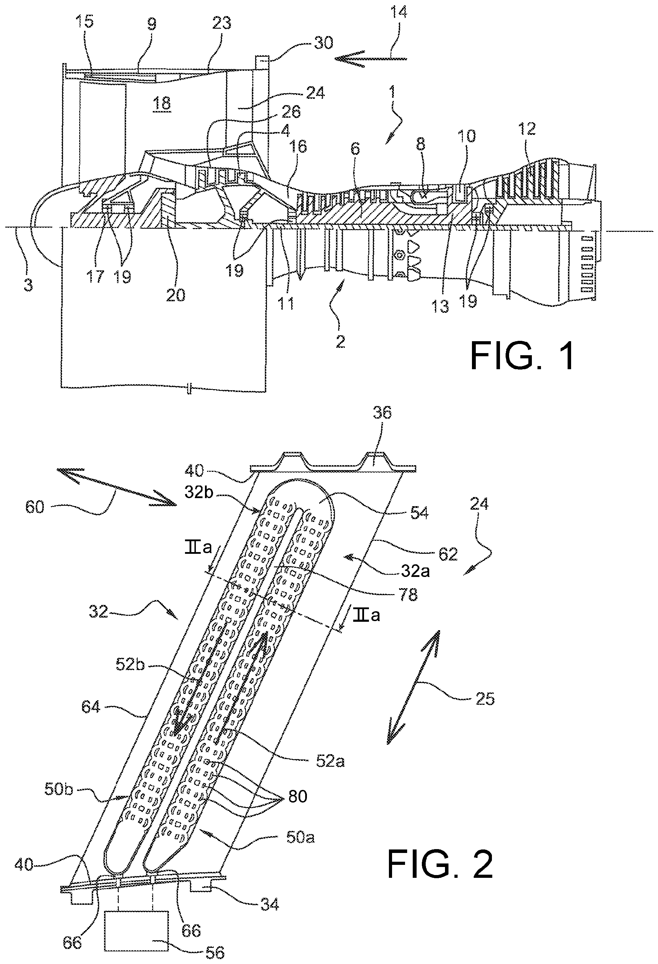

En référence à la figure 1, il est représenté un turboréacteur 1 à double flux et à double corps, présentant un taux de dilution élevé. Le turboréacteur 1 comporte de façon classique un générateur de gaz 2 de part et d'autre duquel sont agencés un compresseur basse pression 4 et une turbine basse pression 12, ce générateur de gaz 2 comprenant un compresseur haute pression 6, une chambre de combustion 8 et une turbine haute pression 10. Par la suite, les termes « avant » et « arrière » sont considérés selon une direction 14 opposée à la direction d'écoulement principale des gaz au sein du turboréacteur, cette direction 14 étant parallèle à l'axe longitudinal 3 de celle-ci. En revanche, les termes « amont » et « aval » sont considérés selon la direction d'écoulement principale des gaz au sein du turboréacteur.

Le compresseur basse pression 4 et la turbine basse pression 12 forment un corps basse pression, et sont reliés l'un à l'autre par un arbre basse pression 11 centré sur l'axe 3. De même, le compresseur haute pression 6 et la turbine haute pression 10 forment un corps haute pression, et sont reliés l'un à l'autre par un arbre haute pression 13 centré sur l'axe 3 et agencé autour de l'arbre basse pression 11. Les arbres sont supportés par des paliers de roulement 19, qui sont lubrifiés en étant agencés dans des enceintes d'huile. Il en est de même pour le moyeu de soufflante 17, également supporté par des paliers de roulement 19.

Le turboréacteur 1 comporte par ailleurs, à l'avant du générateur de gaz 2 et du compresseur basse pression 4, une soufflante 15 unique qui est ici agencée directement à l'arrière d'un cône d'entrée d'air du moteur. La soufflante 15 est rotative selon l'axe 3, et entourée d'un carter de soufflante 9. Sur la figure 1, elle n'est pas entraînée directement par l'arbre basse pression 11, mais seulement entraînée indirectement par cet arbre via un réducteur 20, ce qui lui permet de tourner avec une vitesse plus lente. Néanmoins, une solution à entraînement direct de la soufflante 15, par l'arbre basse pression 11, entre dans le cadre de l'invention.

En outre, le turboréacteur 1 définit une veine primaire 16 destinée à être traversée par un flux primaire, ainsi qu'une veine secondaire 18 destinée à être traversée par un flux secondaire situé radialement vers l'extérieur par rapport au flux primaire, le flux de la soufflante étant donc divisé. Comme cela est connu de l'homme du métier, la veine secondaire 18 est délimitée radialement vers l'extérieur en partie par une virole extérieure 23, préférentiellement métallique, prolongeant vers l'arrière le carter de soufflante 9.

Bien que cela n'ait pas été représenté, le turboréacteur 1 est équipé d'un ensemble d'équipements, par exemple du type pompe à carburant, pompe hydraulique, alternateur, démarreur, actionneur stator à calage variable (VSV), actionneur de vanne de décharge, ou encore générateur électrique de puissance. Il s'agit notamment d'un équipement pour la lubrification du réducteur 20. Ces équipements sont entraînés par une boîte d'accessoires ou AGB (non représentée), qui est également lubrifiée.

En aval de la soufflante 15, dans la veine secondaire 18, il est prévu une couronne d'aubes directrices qui sont ici des aubes directrices de sortie 24 (ou OGV, de l'anglais « Outlet Guide Vane »). Ces aubes statoriques 24 relient la virole extérieure 23 à un carter 26 entourant le compresseur basse pression 4. Elles sont espacées circonférentiellement les unes des autres, et permettent de redresser le flux secondaire après son passage à travers la soufflante 15. De plus, ces aubes 24 peuvent également remplir une fonction structurale, comme c'est le cas dans des exemples de réalisation qui sont présentement décrits. Elles assurent le transfert des efforts provenant du réducteur et des paliers de roulement 19 des arbres moteur et du moyeu de soufflante, vers la virole extérieure 23. Ensuite, ces efforts peuvent transiter par une attache moteur 30 fixée sur la virole 23 et reliant le turboréacteur à un mât d'accrochage (non représenté) de l'aéronef.

Enfin, les aubes directrices de sortie 24 assurent, dans les exemples de réalisation qui sont présentement décrits, une troisième fonction d'échangeur thermique entre le flux d'air secondaire traversant la couronne d'aubes, et du lubrifiant circulant à l'intérieur de ces aubes 24. Le lubrifiant destiné à être refroidi par les aubes directrices de sorties 24 est celui servant à la lubrification des paliers de roulement 19, et/ou des équipements du turboréacteur, et/ou du boîtier d'accessoires, et/ou du réducteur 20. Ces aubes 24 font ainsi partie du/des circuits fluidiques dans lesquels le lubrifiant est mis en circulation pour successivement lubrifier le/les éléments associés, puis pour être refroidi.

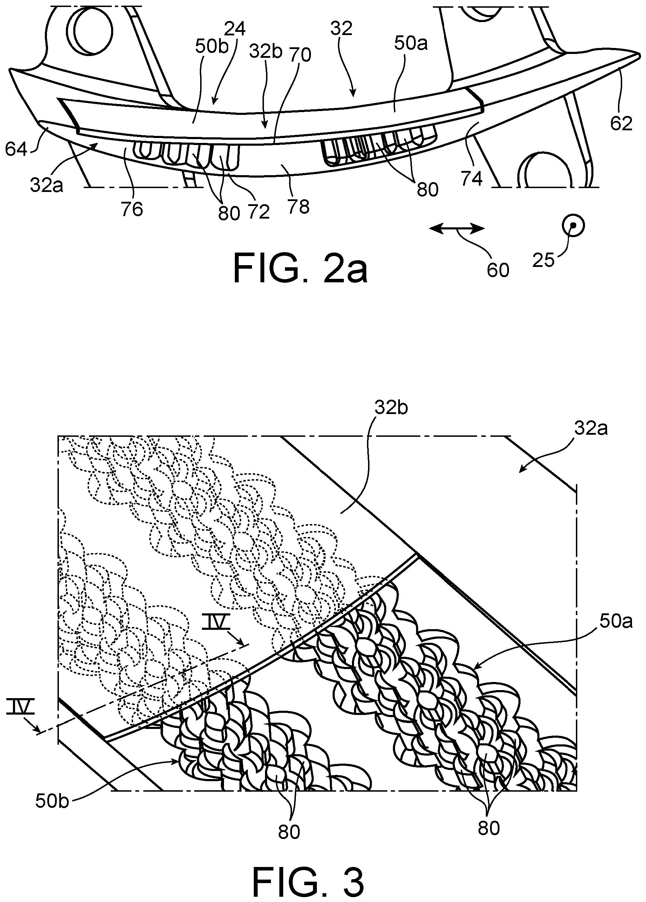

En référence à présent aux figures 2 à 5, il va être décrit l'une des aubes directrices de sortie 24, selon un premier mode de réalisation préféré de l'invention. A cet égard, il est noté que l'invention telle qu'elle va être décrite en référence aux figures 2 à 5 peut s'appliquer à toutes les aubes 24 de la couronne statorique centrée sur l'axe 3, ou bien seulement à certaines de ces aubes.

L'aube 24 peut être d'orientation strictement radiale comme sur la figure 1, ou bien être légèrement inclinée axialement comme cela est montré sur la figure 2. Dans tous les cas, elle est préférentiellement droite en vue de côté telle que montrée sur la figure 2, en s'étendant selon une direction d'envergure 25.

L'aube directrice de sortie 24 comporte une partie aérodynamique 32 qui correspond à sa partie centrale, c'est-à-dire celle exposée au flux secondaire. De part et d'autre de cette partie aérodynamique 32 servant à redresser le flux sortant de la soufflante, l'aube 24 comporte respectivement un pied 34 et une tête 36.

Le pied 34 sert à la fixation de l'aube 24 sur le carter du compresseur basse pression, tandis que la tête sert à la fixation de cette même aube sur la virole extérieure prolongeant le carter de soufflante. De plus, l'aube 24 comprend au niveau de son pied et de sa tête, des plateformes 40 servant à reconstituer la veine secondaire entre les aubes 24, dans la direction circonférentielle.

La partie aérodynamique 32 de l'aube est préférentiellement fabriquée en deux partie distinctes, rapportées ensuite fixement l'une sur l'autre. Il s'agit tout d'abord d'un corps de l'aube 32a, qui comprend non seulement une grande partie de la partie aérodynamique 32, mais également le pied 34, la tête 36 et les plateformes 40. Ce corps 32a est réalisé d'un seul tenant. L'autre partie est formée par un capot 32b fermant le corps, et fixé à ce dernier par une technique classique comme le soudage, le brasage ou encore le collage.

Dans ce premier mode de réalisation préféré de l'invention, la partie aérodynamique 32 est équipée de deux passages intérieurs 50a, 50b sensiblement parallèles l'un à l'autre, et parallèles à la direction d'envergure 25. Plus précisément, il s'agit d'un premier passage intérieur 50a de refroidissement de lubrifiant, qui s'étend selon une première direction principale 52a d'écoulement du lubrifiant. Cette direction 52a est sensiblement parallèle à la direction d'envergure 25, et présente un sens allant du pied 34 vers la tête 36. De manière analogue, il est prévu un second passage intérieur 50b de refroidissement de lubrifiant, qui s'étend selon une seconde direction principale 52b d'écoulement du lubrifiant au sein de ce passage. Cette direction 52b est aussi sensiblement parallèle à la direction d'envergure 25, et présente un sens inverse allant de la tête 36 au pied 34. Le premier passage 50a est donc prévu pour être traversé radialement vers l'extérieur par le lubrifiant, tandis que le second passage 50b est prévu pour être traversé radialement vers l'intérieur. Pour assurer le passage de l'un à l'autre, à proximité de la tête 36, les extrémités radiales externes des deux passages 50a, 50b sont reliées fluidiquement par un coude 54 à 180°, correspondant à un creux pratiqué dans la partie aérodynamique 32. Alternativement, les passages 50a, 50b ne se raccordent pas au sein de la partie aérodynamique 32 de l'aube 24, mais s'étendent chacun séparément sur toute la longueur de la partie aérodynamique 32. Pour se raccorder fluidiquement l'un à l'autre en dehors de l'aube 24, il est par exemple prévu un coude de raccordement agencé radialement vers l'extérieur par rapport à la tête d'aube 36, par exemple en appui sur cette tête.

Les extrémités radiales internes des deux passages 50a, 50b sont quant à elles reliées au circuit de lubrifiant 56, schématisé par l'élément 56 sur la figure 2. Ce circuit 56 comprend notamment une pompe (non représentée), permettant d'appliquer au lubrifiant le sens de circulation désiré au sein des passages 50a, 50b, à savoir l'introduction du lubrifiant par l'extrémité radiale interne du premier passage 50a, et l'extraction du lubrifiant par l'extrémité radiale interne du second passage 50b. Des raccords 66 assurent la communication fluidique entre les extrémités radiales internes des passages 50a, 50b et le circuit 56, ces raccords 66 traversant le pied 34.

Les deux passages 50a, 50b ainsi que le coude 54 présentent ensemble une forme générale de U, avec le premier passage 50a et le second passage 50b décalés l'un de l'autre selon une direction transversale 60 de l'aube sensiblement orthogonale à la direction d'envergure 25. Pour optimiser au mieux les échanges thermiques, le premier passage 50a se situe du côté d'un bord de fuite 62 de l'aube 24, tandis que le second passage 50b se situe du côté d'un bord d'attaque 64. Cependant, une situation inverse peut être retenue, sans sortir du cadre de l'invention. Il est également noté que l'invention pourrait prévoir une partie aérodynamique 32 qu'avec un unique passage intérieur de refroidissement, sans sortir du cadre de l'invention. Dans ce cas de figure, certaines aubes seraient traversées par le lubrifiant de l'intérieur vers l'extérieur, tandis que d'autres aubes seraient traversées dans le sens inverse.

La partie aérodynamique 32 de l'aube directrice de sortie 24 comporte une paroi d'intrados 70, une paroi d'extrados 72, une zone pleine 74 raccordant les deux parois 70, 72 à proximité du bord de fuite 62, une zone pleine 76 raccordant les deux parois 70, 72 à proximité du bord d'attaque 64, ainsi qu'une zone pleine centrale 78. Cette dernière zone 78 raccorde les deux parois 70, 72 au niveau d'une portion sensiblement centrale de celles-ci, selon la direction de la corde de l'aube. Elle sert également de renfort structural et s'étend du pied 34 jusqu'au coude 54, tandis que les zones pleines 74, 76 s'étendent sur sensiblement toute la longueur de la partie 32, selon la direction d'envergure 25. Le premier passage 50a est formé entre les parois 70, 72 et entre les zones pleines 74, 78, tandis que le second passage 50b est formé entre les parois 70, 72 et entre les zones pleines 76, 78. Les parois d'intrados et d'extrados 70, 72 présentent, au regard des passages 50a, 50b qu'elles délimitent, des épaisseurs sensiblement constantes. En revanche, les passages 50a, 50b s'étendent transversalement selon la direction 60 en présentant une épaisseur variable entre les deux parois 70, 72. L'épaisseur maximale de ces passages peut être de l'ordre de quelques millimètres. Alternativement, les passages 50a, 50b pourraient avoir une épaisseur constante, mais dans ce cas les deux parois 70, 72 adopteraient alors une épaisseur variable pour obtenir le profil aérodynamique de l'aube.

Il est noté que la paroi d'extrados 72 est intégrée au corps 32a de l'aube, tandis que la paroi d'intrados 70 est intégrée au capot 32b, ce dernier s'étendant entre les zones pleines 74, 76 qu'il forme en partie.

Les deux passages intérieurs 50a, 50b de refroidissement de lubrifiant présentent la particularité d'intégrer des plots perturbateurs de flux. Dans le premier mode de réalisation préféré, ces plots 80 sont réalisés d'un seul tenant avec la paroi extrados 72, dans le corps 32a de l'aube. Ces plots 80 sont réalisés en saillie en direction de la paroi intrados 70, et ils équipent chaque passage intérieur 50a, 50b. La disposition et la forme des plots 80 sont sensiblement identiques ou analogues dans les deux passages 50a, 50b. Ils sont également prévus dans des mêmes densités, bien que cela puisse en être autrement, sans sortir du cadre de l'invention. Par conséquent, seuls les plots 80 du premier passage intérieur 50a vont à présent être décrits, mais il est à comprendre que cette description est également applicable par analogie aux plots du second passage intérieur 50b. Par ailleurs, il est noté que le coude 54 définit un espace intérieur qui est préférentiellement exempt de plots.

Les plots 80 dans le premier passage 50a sont sensiblement orthogonaux à la direction 52a. La hauteur de plot selon cette même direction est par exemple de l'ordre de un ou plusieurs millimètres, tandis que leur épaisseur prend une valeur évolutive comprise de préférence entre 0,5 et 3 mm. Dans au moins une zone du passage 50a, et de préférence dans l'intégralité de ce dernier, les plots 80 sont prévus dans une densité par exemple d'environ 3 plots/cm². Plus généralement, la densité est comprise par exemple entre environ 1 et 5 plots/cm² en moyenne. A cet égard, il est noté que la densité de plots dépend de la géométrie de la fraise cloche, avec ses caractéristiques de diamètres intérieur et extérieur. L'objectif est à la fois d'avoir un rapport de diamètres le plus faible possible, et une valeur de diamètre extérieur la plus faible possible afin d'augmenter la densité de plots. Sur les figures, la densité de plots obtenue est de l'ordre de 2 plots/cm²

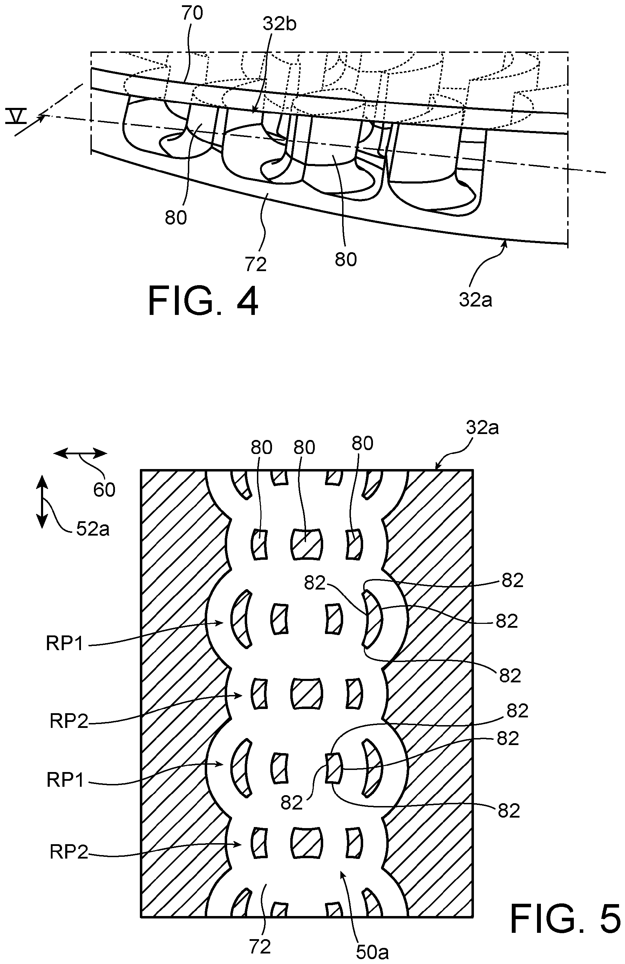

En référence plus spécifiquement à la figure 5, les plots 80 sont répartis en rangées de plots RP1, RP2 qui se succèdent en alternance selon la première direction 52a, chaque rangée étant sensiblement droite et parallèle à la direction transversale 60. Dans le passage 50a, ce sont ainsi plusieurs dizaines de rangées d'ailettes qui se succèdent selon la première direction 52a. En outre, au sein de chaque rangée, les plots 80 sont espacées les uns des autres de façon assez régulière selon la direction 60.

Les premières rangées de plots RP1 comprennent chacune quatre plots 80, tandis que les secondes rangées de plots RP2 comprennent chacune trois plots 80. Tous ces plots sont agencés en quinconce, pour une meilleure perturbation du flux de lubrifiant, et un échange thermique accru.

Une autre particularité de l'invention réside dans la fabrication des plots 80 par usinage de la paroi extrados 72 à l'aide d'une fraise cloche. Ainsi, dans toute coupe orthogonale aux plots 80 telle que celle de la figure 5, chaque plot 80 est ici défini par quatre côtés 82 présentant chacun une forme d'arc de cercle. Les quatre arcs de cercle de tous les plots présentent seulement deux diamètres différents, à savoir un premier diamètre correspondant à un diamètre extérieur de la fraise cloche utilisée pour les usinages, et un second diamètre correspondant à un diamètre intérieur de la fraise cloche.

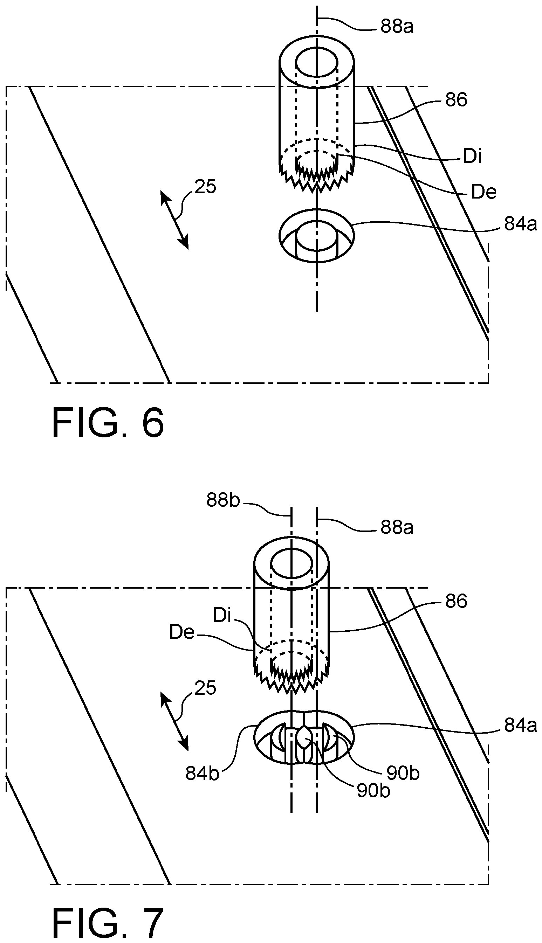

Cette fraise cloche est montrée sur les figures 6 et 7, qui schématisent un partie d'un procédé de fabrication de l'aube selon un mode de réalisation préféré.

Sur la figure 6, il est montré un premier usinage 84a réalisé avec la fraise cloche 86 selon un premier axe d'usinage 88a orthogonal à la direction d'envergure 25. Ce premier usinage, réalisé dans la paroi d'extrados 72 encore à l'état de bloc de matière au sein du corps 32a de l'aube, laisse apparaître une première saillie 90a de section circulaire. Cette saillie est prévue constituer deux plots distincts 80 à l'issue de l'étape de réalisation des plots par usinage. Cette étape est en effet poursuivie par un second usinage 84b réalisé avec la même fraise cloche 86 selon un second axe d'usinage 88b distinct et parallèle au premier axe 88a, comme le montre la figure 7. Ce second usinage réalisé dans la paroi d'extrados 72 laisse apparaître deux secondes saillies 90b de section circulaire et issues de la première saillie 90a. Elles sont respectivement prévues pour constituer deux plots distincts 80 à l'issue de l'étape de réalisation des plots.

Ces usinages sont ainsi répétés avec la même fraise cloche 86, selon des axes d'usinage parallèles et décalés les uns des autres. Comme évoqué précédemment, de faibles angles peuvent être prévus entre ces axes d'usinage, lorsqu'il est réalisé des usinages d'axes orthogonaux localement à une surface moyenne de l'aube vrillée. Chaque usinage crée une empreinte de forme torique dans la paroi extrados 72, ces empreintes se chevauchant partiellement les unes les autres pour aboutir à la configuration souhaitée pour les plots 80. Chaque empreinte présente alors un diamètre intérieur correspondant au diamètre intérieur « Di » de la fraise cloche 86, ainsi qu'un diamètre extérieur correspondant au diamètre extérieur « De » de cette fraise.

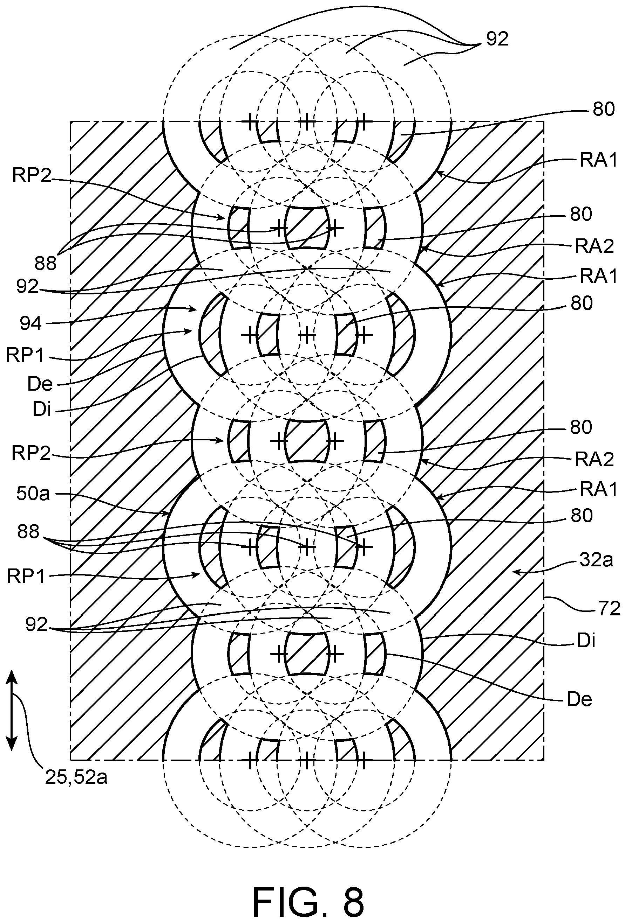

La figure 8 montre en coupe les axes d'usinage 88 qui sont réalisés en quinconce. Ces axes 88, représentés par des points dans cette vue en coupe orthogonale aux plots 80, forment également les centres des anneaux 92 correspondant aux empreintes combinées découlant des différents usinages par la fraise cloche. A cet égard, il est noté que dans le passage intérieur 50a, un espace 94 est défini entre les plots 80 qui subsistent. En coupe dans un plan quelconque orthogonal aux plots 80, cet espace 94 présente ainsi une géométrie définie exclusivement par l'ensemble d'anneaux 92 qui se recouvrent partiellement les uns les autres, et dont les centres 88 sont agencés en quinconce. Bien entendu, chacun de ces anneaux 92 présente un diamètre intérieur « Di » et un diamètre extérieur « De » correspondant à ceux de la fraise 86. A ce sujet, il est noté que le diamètre extérieur « De » est compris de préférence entre 20 et 50 mm, tandis que le diamètre intérieur « Di » est compris de préférence entre 5 et 20 mm.

Plus précisément, les anneaux 92 sont répartis en rangées d'anneaux RA1, RA2 qui se succèdent en alternance selon la première direction 52a, chaque rangée étant sensiblement droite et parallèle à la direction transversale 60. Dans le passage 50a, ce sont ainsi plusieurs dizaines de rangées d'anneaux qui se succèdent selon la première direction 52a.

Pour l'obtention de la configuration désirée des plots 80, les premières rangées d'anneaux RA1 comprennent chacune quatre anneaux 92, tandis que les secondes rangées de plots RA2 comprennent chacune trois anneaux 92. Cependant, la géométrie de ces rangées peut différer, en fonction des paramètres désirés comme la taille des plots, la section de passage du lubrifiant, etc.

De retour à la figure 2, durant le fonctionnement du moteur, le lubrifiant circulant à travers le circuit 56 est introduit dans le premier passage intérieur 50a, dans la première direction 52a allant radialement vers l'extérieur. A ce stade, le lubrifiant présente une température élevée. Un échange thermique s'effectue alors entre ce lubrifiant épousant les plots 80 du premier passage 50a, et le flux secondaire épousant la surface extérieure des parois d'intrados et d'extrados. Le lubrifiant, après avoir été redirigé par le coude 54 dans le second passage 50b, subit dans ce dernier un refroidissement analogue, toujours par échange thermique avec le flux d'air secondaire et en circulant selon la seconde direction principale d'écoulement 52b. Ensuite, le lubrifiant refroidi est extrait de l'aube 24, et redirigé par le circuit fermé 56 vers des éléments à lubrifier et/ou vers un réservoir de lubrifiant à partir duquel du lubrifiant refroidi est pompé pour lubrifier des éléments.

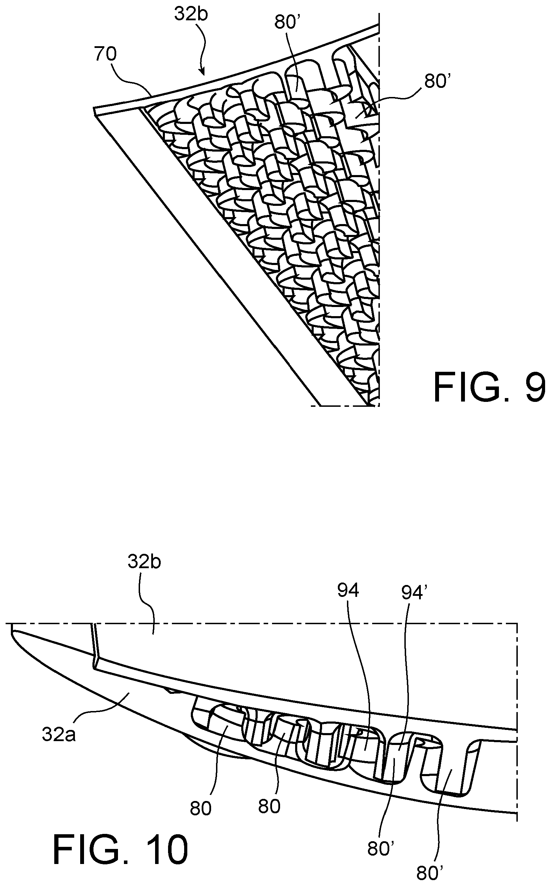

Il est noté que dans un autre mode de réalisation préféré de l'invention, les plots 80 pourraient être réalisés sur le capot 32b, et non sur le corps d'aube 32a. Selon encore un autre mode de réalisation préféré montré sur les figures 9 et 10, des plots peuvent être prévus de manière identique ou similaire sur le capot 32b et sur le corps d'aube 32a. Plus précisément, des plots 80 sont prévus sur le corps d'aube 32a comme cela a été décrit précédemment, et des plots additionnels 80' sont prévus de manière identique ou similaire sur le capot 32b fermant le corps. Par conséquent, entre les plots additionnels 80', l'espace présente une géométrie qui résulte également de la combinaison d'un ensemble d'anneaux additionnels (non représentés).

Pour augmenter la surface mouillée, il est préférentiellement prévu que les plots 80 du corps 32a pénètrent dans l'espace 94' défini entre les plots additionnels 80', et inversement, que les plots additionnels 80' du capot 32b pénètrent dans l'espace 94 défini entre les plots 80. Alternativement, les plots 80 et plots additionnels pourraient être en regard deux à deux, et éventuellement fixés deux à deux à leurs extrémités en regard.

Bien entendu, diverses modifications peuvent être apportées par l'homme du métier à l'invention qui vient d'être décrite, uniquement à titre d'exemples non limitatifs. En particulier, les caractéristiques techniques spécifiques à chacun des modes de réalisation décrits ci-dessus sont combinables entre elles, sans sortir du cadre de l'invention. Enfin, il est noté que dans le cas non illustré des aubes directrices d'entrée pour redresser le flux d'air en amont de la soufflante, ces aubes sont agencées dans tout le flux d'air de la soufflante autour d'un cône d'entrée d'air non rotatif, les pieds des aubes étant alors reliés à ce cône fixe d'entrée d'air.

## Revendications

1. Aube directrice (24) destinée à être agencée dans tout ou partie d'un flux d'air d'une soufflante (15) de turbomachine d'aéronef à double flux, l'aube directrice comprenant un pied (34), une tête (36), ainsi qu'une partie aérodynamique (32) de redressement de flux agencée entre le pied et la tête de l'aube, ladite partie aérodynamique de l'aube comportant au moins un passage intérieur (50a, 50b) de refroidissement de lubrifiant en partie délimité par une paroi d'intrados (70) et par une paroi d'extrados (72) de l'aube, ledit passage étant traversé par des plots (80) perturbateurs de flux réalisés d'un seul tenant avec l'une des parois d'intrados (70) et d'extrados (72),
**caractérisée en ce que** dans un plan de coupe quelconque traversant orthogonalement les plots (80), l'espace (94) défini entre ces plots présente une géométrie définie exclusivement par un ensemble d'anneaux (92) de même dimension, se recouvrant partiellement les uns les autres et délimitant chacun en partie au moins deux de ces plots (80).

2. Aube selon la revendication 1, **caractérisée en ce que** dans ledit plan de coupe, chaque plot (80) est délimité par quatre côtés (82) chacun présentant une forme d'arc de cercle.

3. Aube selon la revendication 1 ou la revendication 2, **caractérisée en ce que** ledit ensemble d'anneaux (92) est réalisé par une alternance de premières et de secondes rangées d'anneaux (RA1, RA2) se chevauchant partiellement et se succédant selon une direction d'envergure (25) de l'aube, chaque première rangée (RA1) comprenant de préférence un nombre N d'anneaux (92) et chaque seconde rangée (RA2) comprenant de préférence un nombre N-1 d'anneaux (92), les centres (88) de ces anneaux étant disposés en quinconce de manière à définir une alternance de premières rangées de plots (RP1) comprenant chacune un nombre N+1 de plots (80) et de secondes rangées de plots (RP2) comprenant chacune un nombre N de plots (80).

4. Aube selon l'une quelconque des revendications précédentes, **caractérisé en ce que** les anneaux (92) de l'ensemble présentent un diamètre extérieur compris entre 20 et 50 mm et un diamètre intérieur compris entre 5 et 20 mm.

5. Aube selon l'une quelconque des revendications précédentes, **caractérisée en ce que** ladite une des parois d'intrados et d'extrados (70, 72) équipée des plots (80) fait partie d'un corps (32a) de l'aube, ou d'un capot (32b) de fermeture de ce corps.

6. Aube selon l'une quelconque des revendications précédentes, **caractérisée en ce que** l'autre des éléments parmi les parois d'intrados et d'extrados (70, 72) est réalisé d'un seul tenant avec des plots additionnels (80') perturbateurs de flux, et **en ce que** dans un plan de coupe quelconque traversant orthogonalement les plots additionnels (80'), l'espace (94') défini entre ces plots additionnels présente une géométrie définie exclusivement par un ensemble d'anneaux additionnels de même dimension, se recouvrant partiellement les uns les autres et délimitant chacun en partie au moins deux de ces plots additionnels (80').

7. Aube selon la revendication précédente, **caractérisée en ce que** les plots additionnels (80') pénètrent dans l'espace (94) défini entre les plots (80), et **en ce que** les plots (80) pénètrent dans l'espace (94') défini entre les plots additionnels (80').

8. Turbomachine (1) d'aéronef, de préférence un turboréacteur, comprenant une pluralité d'aubes directrices (24) selon l'une quelconque des revendications précédentes, agencées en aval ou en amont d'une soufflante (15) de la turbomachine.

9. Procédé de fabrication d'une aube directrice (24) destinée à être agencée dans tout ou partie d'un flux d'air d'une soufflante (15) de turbomachine d'aéronef à double flux, l'aube directrice comprenant un pied (34), une tête (36), ainsi qu'une partie aérodynamique (32) de redressement de flux agencée entre le pied et la tête de l'aube, ladite partie aérodynamique de l'aube comportant au moins un passage intérieur (50a, 50b) de refroidissement de lubrifiant en partie délimité par une paroi d'intrados (70) et par une paroi d'extrados (72) de l'aube, ledit passage étant traversé par des plots (80) perturbateurs de flux réalisés d'un seul tenant avec l'une des parois d'intrados (70) et d'extrados (72),
**caractérisé en ce qu'**il comprend une étape de réalisation des plots (80) par une pluralité d'usinages de ladite une des parois d'intrados (70) et d'extrados (72) à l'aide d'une fraise cloche (86), cette étape étant mise en œuvre de sorte que les parties subsistantes non-usinées par ladite fraise cloche forment lesdits plots (80).

10. Procédé selon la revendication 9, **caractérisé en ce que** les usinages à l'aide de la fraise cloche (86) sont réalisés selon des axes d'usinage (88, 88a, 88b) parallèles, de préférence agencés en quinconce.

## Patentansprüche

1. Leitschaufel (24) zur Anordnung ganz oder teilweise in einem Luftstrom eines Gebläses (15) einer Zweistrom-Strömungsmaschine eines Luftfahrzeugs, wobei die Leitschaufel einen Fuß (34), einen Kopf (36) sowie einen zwischen dem Fuß und dem Kopf der Schaufel angeordneten, aerodynamischen Teil (32) zur Gleichrichtung des Stroms aufweist, wobei der aerodynamische Teil der Schaufel zumindest einen inneren Durchgang (50a, 50b) zur Kühlung von Schmiermittel aufweist, der teilweise durch eine druckseitige Wand (70) und durch eine saugseitige Wand (72) der Schaufel begrenzt ist, wobei der Durchgang von Stromstörstufen (80) durchquert wird, welche einstückig mit der druckseitigen (70) und der saugseitigen (72) Wand ausgebildet sind, **dadurch gekennzeichnet, dass** in einer beliebigen Schnittebene, die orthogonal durch die Stufen (80) verläuft, der zwischen diesen Stufen definierte Raum (94) eine Geometrie darstellt, die ausschließlich durch eine Einheit von gleichgroßen Ringen (92) definiert ist, wobei sich diese teilweise gegenseitig überdecken und jeweils zum Teil mindestens zwei dieser Stufen (80) begrenzen.

2. Schaufel nach Anspruch 1, **dadurch gekennzeichnet, dass** in der Schnittebene jede Stufe (80) durch vier Seiten (82) begrenzt ist, welche jeweils eine Kreisbogenform aufweisen.

3. Schaufel nach Anspruch 1 oder Anspruch 2, **dadurch gekennzeichnet, dass** die Einheit von Ringen (92) durch einen Wechsel von ersten und zweiten Ringreihen (RA1, RA2) ausgebildet ist, die sich teilweise überlappen und in Richtung der Spannweite (25) der Schaufel aufeinanderfolgen, wobei jede erste Reihe (RA1) vorzugsweise eine Anzahl N von Ringen (92) aufweist und jede zweite Reihe (RA2) vorzugsweise eine Anzahl N-1 von Ringen (92) aufweist, wobei die Mittelpunkte (88) dieser Ringe versetzt angeordnet sind, so dass sie einen Wechsel von ersten Stufenreihen (RP1), die jeweils eine Anzahl N+1 von Stufen (80) aufweisen, und zweiten Stufenreihen (RP2) definieren, die jeweils eine Anzahl N von Stufen (80) aufweisen.

4. Schaufel nach einem der vorhergehenden Ansprüche, **dadurch gekennzeichnet, dass** die Ringe (92) der Einheit einen Außendurchmesser im Bereich von 20 bis 50 mm und einen Innendurchmesser im Bereich von 5 bis 20 mm aufweisen.

5. Schaufel nach einem der vorhergehenden Ansprüche, **dadurch gekennzeichnet, dass** die eine der druckseitigen und saugseitigen Wände (70, 72), welche mit den Stufen (80) versehen ist, Teil eines Körpers (32a) der Schaufel oder einer Verschlussklappe (32b) des Körpers bildet.

6. Schaufel nach einem der vorhergehenden Ansprüche, **dadurch gekennzeichnet, dass** das andere der Elemente aus der druckseitigen und der saugseitigen Wand (70, 72) in einem Stück mit zusätzlichen Stromstörstufen (80') ausgeführt ist, und dass in einer beliebigen Schnittebene, die die zusätzlichen Stufen (80') orthogonal durchquert, der zwischen diesen zusätzlichen Stufen definierte Raum (94') eine Geometrie darstellt, welche ausschließlich durch eine Einheit von zusätzlichen gleichgroßen Ringen definiert ist, die sich teilweise gegenseitig überdecken und jeweils zum Teil mindestens zwei der zusätzlichen Stufen (80') begrenzen.

7. Schaufel nach dem vorhergehenden Anspruch, **dadurch gekennzeichnet, dass** die zusätzlichen Stufen (80') in den zwischen den Stufen (80) definierten Raum (94) eindringen, und dass die Stufen (80) in den zwischen den zusätzlichen Stufen (80') definierten Raum (94') eindringen.

8. Strömungsmaschine eines Luftfahrzeugs, vorzugsweise ein Turboluftstrahltriebwerk, mit einer Mehrzahl von Leitschaufeln (24) nach einem der vorhergehenden Ansprüche, welche einem Gebläse (15) der Strömungsmaschine nachgelagert oder vorgelagert sind.

9. Herstellungsverfahren einer Leitschaufel (24) zur Anordnung ganz oder teilweise in einem Luftstrom eines Gebläses (15) einer Zweistrom-Strömungsmaschine eines Luftfahrzeugs, wobei die Leitschaufel einen Fuß (34), einen Kopf (36) sowie einen zwischen dem Fuß und dem Kopf der Schaufel angeordneten aerodynamischen Teil (32) zur Gleichrichtung des Stromes aufweist, wobei der aerodynamische Teil der Schaufel mindestens einen inneren Durchgang (50a, 50b) zur Kühlung von Schmiermittel aufweist, der teilweise durch eine druckseitige Wand (70) und durch eine saugseitige Wand (72) der Schaufel begrenzt ist, wobei der Durchgang von Stromstörstufen (80) durchquert wird, welche einstückig mit einer der druckseitigen (70) und der saugseitigen Wand (72) ausgeführt sind,
**dadurch gekennzeichnet, dass** das Verfahren einen Schritt zur Ausführung der Stufen (80) durch eine Mehrzahl von Bearbeitungen der einen der druckseitigen (70) und der saugseitigen Wand (72) mit Hilfe eines Glockenfräsers (86) umfasst, wobei dieser Schritt derart durchgeführt wird, dass die nicht durch den Glockenfräser bearbeiteten, verbleibenden Teile die Stufen (80) bilden.

10. Verfahren nach Anspruch 9, **dadurch gekennzeichnet, dass** die Bearbeitungen mit Hilfe des Glockenfräsers (86) entlang der parallelen Bearbeitungsachsen (88, 88a, 88b) ausgeführt werden, die vorzugsweise versetzt angeordnet sind.

## Claims

1. A guide vane (24) for being arranged in all or part of an airflow of a fan (15) of an aircraft dual flow turbomachine, the guide vane comprising a root (34), an edge (36), as well as a flow straightening aerodynamic part (32) arranged between the root and the edge of the vane, said aerodynamic part of the vane including at least one lubricant cooling internal passage (50a, 50b) partly delimited by a front side wall (70) and a back side wall (72) of the vane, flow disturbing studs (80) made as a single piece with one of the front side (70) and back side (72) walls passing through said passage,
**characterised in that** in any section plane orthogonally passing through the studs (80), the space (94) defined between these studs has a geometry exclusively defined by a set of rings (92) with a same dimension, partially covering each other and each partly delimiting at least two of these studs (80).

2. The vane according to claim 1, **characterised in that** in said section plane, each stud (80) is delimited by four sides (82) each having an arc of circle shape.

3. The vane according to claim 1 or claim 2, **characterised in that** said set of rings (92) is made by alternating first and second rows of rings (RA1, RA2) partially overlapping each other and succeeding each other along a span direction (25) of the vane, each first row (RA1) preferably comprising a number N of rings (92) and each second row (RA2) preferably comprising a number N-1 of rings (92), the centres (88) of these rings being disposed in a staggered manner so as to define alternating first rows of studs (RP1) each comprising a number N+1 of studs (80) and second rows of studs (RP2) each comprising a number N of studs (80).

4. The vane according to any of the preceding claims, **characterised in that** the rings (92) of the set have an external diameter between 20 and 50mm and an internal diameter between 5 and 20mm.

5. The vane according to any of the preceding claims, **characterised in that** said one of the front side and back side walls (70, 72) equipped with the studs (80) is part of a body (32a) of the vane, or a cap (32b) for closing this body.

6. The vane according to any of the preceding claims, **characterised in that** the other of the elements from the front side and back side walls (70, 72) is made as a single piece with additional flow disturbing studs (80'), and **in that** in any section plane orthogonally passing through the additional studs (80'), the space (94') defined between these additional studs has a geometry exclusively defined by a set of additional rings with a same dimension, partially covering each other and each partly delimiting at least two of these additional studs (80').

7. The vane according to the preceding claim, **characterised in that** the additional studs (80') penetrate the space (94) defined between the studs (80), and **in that** the studs (80) penetrate the space (94') defined between the additional studs (80').

8. An aircraft turbomachine (1), preferably a turbojet engine, comprising a plurality of guide vanes (24) according to any of the preceding claims, arranged downstream or upstream of a fan (15) of the turbomachine.

9. A method for manufacturing a guide vane (24) for being arranged in all or part of an airflow of a fan (15) of an aircraft dual flow turbomachine, the guide vane comprising a root (34), an edge (36), as well as a flow straightening aerodynamic part (32) arranged between the root and the edge of the vane, said aerodynamic part of the vane including at least one lubricant cooling internal passage (50a, 50b) partly delimited by a front side wall (70) and a back side wall (72) of the vane, flow disturbing studs (80) made as a single piece with one of the front side (70) and back side (72) walls passing through said passage,
**characterised in that** it comprises a step of making the studs (80) by repeatedly machining said one of the front side (70) and back side (72) walls using a chamfering cutter (86), this step being implemented such that the remaining parts not machined by said chamfering cutter form said studs (80).

10. The method according to claim 9, **characterised in that** the repeated machining using the chamfering cutter (86) is made along parallel machining axes (88, 88a, 88b), preferably arranged in a staggered manner.
